# EUROPÄISCHE PATENTSCHRIFT

(11) **EP 0 529 018 B1**
(45) Veröffentlichungstag und Bekanntmachung des Hinweises auf die Patenterteilung: **05.04.1995**
(21) Anmeldenummer: 92904099.6
(22) Anmeldetag: 10.02.1992
(51) Int. Cl.: B60T 8/36

(54) **HYDRAULIKAGGREGAT FÜR HYDRAULISCHE STEUER- ODER REGELVORRICHTUNGEN**
HYDRAULIC AGGREGATE FOR HYDRAULIC CONTROL OR REGULATING DEVICES
GROUPE HYDRAULIQUE POUR DISPOSITIFS DE COMMANDE OU DE REGULATION HYDRAULIQUES

(30) Priorität: 13.03.1991 DE 4108028
(43) Veröffentlichungstag der Anmeldung: 03.03.1993
(73) Patentinhaber: ITT Automotive Europe GmbH, 60488 Frankfurt (DE)
(72) Erfinder: BECK, Erhard, D-6290 Weilburg (DE); SONNENSCHEIN, Georg, D-6236 Eschborn 1 (DE)
(86) Internationale Anmeldenummer: EP9200279
(87) Internationale Veröffentlichungsnummer: WO9216397

(56) Entgegenhaltungen:
- EP-A- 355 055
- DE-A- 3 913 352

## Beschreibung

Die Erfindung betrifft ein Hydraulikaggregat für hydraulische Steuer- oder Regelvorrichtungen, insbesondere für Bremsdruckregelvorrichtungen in Antiblockierregelsystemen oder Antriebsschlupfregelsystemen für Kraftfahrzeuge nach dem Oberbegriff des Anspruchs 1.

Hydraulikaggregate zur Steuerung und Regelung von Druckmedien finden in der Industriehydraulik ein vielfältiges Anwendungsspektrum. Hierbei kommt der Verwendung von Hydraulikaggregaten für die Fahrzeugausrüstung eine besondere Stellung zu, da selbst bei außergewöhnlichen Einsatzbedingungen die Druckmittelströme mit hoher Präzision zu regeln sind.

Besonders bei der Integration von Hydraulikaggregaten innerhalb des Fahrzeugbereichs sind über die eigentliche Funktionstauglichkeit hinaus zusätzlich aktive wie auch passive Maßnahmen zu berücksichtigen, die dem Komfortbestreben hinsichtlich Servicefreundlichkeit und Geräuscharmut der Anlage dienlich sind.

Hierzu sei beispielsweise auf die gemäß der DE-OS 39 13 352 bekannte Anordnung von Druckpulsationsdämpfer innerhalb eines Hydraulikaggregates für schlupfgeregelte Bremsanlagen verwiesen. Diese Druckpulsationsdämpfer absorbieren in Abhängigkeit ihre elastischen Verformungseigenschaften die von den Schaltfrequenzen der Elektromagnetventile herrührenden Schallemissionen, so daß der als störend empfundene Geräuschpegel abgesenkt werden kann. Nachteilig anzusehen ist jedoch, daß bei diesem Verfahren eine elastische Verformung des Druckpulsationsdämpfers zwangsläufig auch zu einer unerwünschten Vergrößerung der Druckmittelvolumenaufnahme führt.

Daher ist es die Aufgabe der Erfindung, unter Beibehaltung eines möglichst unveränderten einfachen Aufbaus des Hydraulikaggregates einen Lösungsweg aufzuzeigen, der den von den Schaltstellungen der Elektromagnetventile abhängige Geräuschpegel und dessen Fortpflanzung wirkungsvoll reduziert, ohne eine zusätzliche Volumenaufnahme während des Betriebseinsatzes hinnehmen zu müssen.

Diese Aufgabe wird erfindungsgemäß durch die den Patentanspruch 1 kennzeichnenden Merkmale gelöst.

Die Erfindung basiert somit auf dem Gedanken, bei geöffnetem elektromagnetischem Auslaßventil das von der Druckmittelquelle zum Druckmittelverbraucher nachströmende Druckmittelvolumen über ein im Ventilaufnahmekörper integriertes Schieberventil zu begrenzen, in dem eine am Schieberventil wirksame Steuerkante den Druckmittelstrom infolge der differenzdruckabhängigen Hubbewegung des Schieberventils reduziert.

Um eine Drosselfunktion sicherzustellen, wird im Gegensatz zur gebräuchlichen Blendenanordnung innerhalb des in der Grundstellung auf ungehinderten Durchlaß geschalteten Elektromagnetventils, gemäß den Ansprüchen 2 und 3, die Blende direkt im Schieberventil und zwar im Bereich einer die Druckmittelquelle mit dem elektromagnetischen Einlaßventil verbindenden Ringnut integriert.

Die konkrete Ausgestaltung der Erfindung gemäß dem Anspruch 4 sieht vor, die den Volumenstrom begrenzenden Regelkanten aus den Begrenzungsflächen der ersten Ringnut und den Begrenzungsflächen eines an der Druckmittelquelle angeschlossenen Zulaufkanals zu bilden.

Eine vorteilhafte Druckmittelverbindung zwischen der Druckmittelquelle und dem Elektromagnetventil zeigen die Merkmale des Anspruchs 5 auf, wonach über einen im wesentlichen axial im Schieberventil verlaufenden Druckmittelkanal eine hydraulische Verbindung zwischen der ersten Ringnut und einer weiteren Ringnut besteht, die sich bis zu dem in der Grundstellung auf ungehinderten Durchlaß geschalteten Elektromagnetventil erstreckt.

Eine weitere Präzisierung zur Betätigung des Schieberventils geht aus den Merkmalen der Ansprüche 6 und 7 hervor, wonach zur Grundpositionierung des Schieberventils eine an einer Stirnfläche des Schieberventils anliegende Druckfeder in einer verlängerten Aufnahmebohrung wirksam ist, wobei in Abhängigkeit der Schaltstellung des in der Grundstellung geschlossenen Elektromagnetventils, die der Druckfeder zugewandte Stirnfläche des Schieberventils druckentlastet wird, sobald dieses als Auslaßventil wirksame Elektromagnetventil die Radbremse druckentlastet.

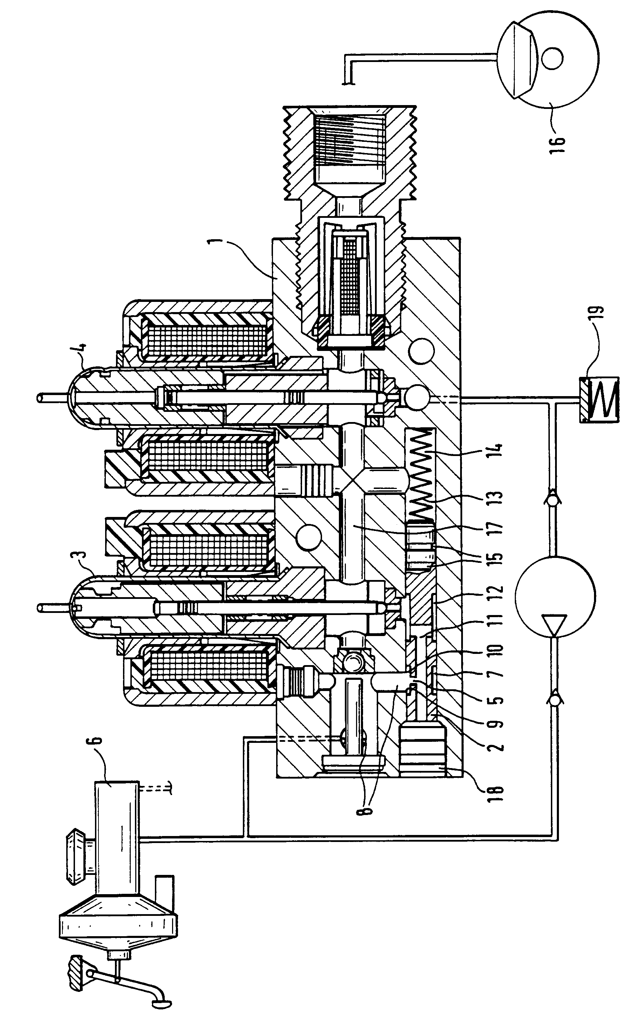

Weitere Merkmale und Vorteile der Erfindung werden nachfolgend anhand der Figur 1 näher erläutert.

Die Figur 1 zeigt ein Hydraulikaggregat im Querschnitt mit den für die Betätigung einer schlupfgeregelten Radbremse notwendigen Bauteilen. Im Ventilaufnahmekörper 1 sind zwei Elektromagnetventile 3,4 eingefügt, wobei das in der Abbildung links angeordnete Elektromagnetventil 3 in der Grundstellung einen ungehinderten hydraulischen Durchlaß zwischen der Druckmittelquelle 6 und dem Druckmittelverbraucher 16 aufweist, während das dazu parallel angeordnete Elektromagnetventil 4 in seiner elektromagnetisch stromlosen Grundstellung hydraulisch verschlossen den Druckabbau im Druckmittelverbraucher 16 verhindert. Als Druckmittelverbraucher 16 wird eine an einer Druckmittelverschraubung angegliederte Radbremse gezeigt, während stromaufwärts vor dem in der Grundstellung auf ungehinderten Durchlaß geschaltetes Elektromagnetventil 3 ein von einer Hilfsdruckpumpe unterstützten Bremdsdruckgeber die Druckmittelquelle 6 der Bremsanlage bildet. Über einen innerhalb des Ventilaufnahmekörpers 1 an der Druckmittelquelle 6 angeschlossenen Zulaufkanal 8 gelangt Druckmittel zur im Schieberventil 2 eingelassenen ersten Ringnut 7, um von dort über die stromabwärts befindliche Blende 5 und den dort im wesentlichen axial verlaufenden Druckmittelkanal 11 eine hydraulische Verbindung zu einer weiteren Ringnut 12 zu schaffen, die mit dem in der Grundstellung auf Durchlaß geschalteten Elektromagnetventil 3 zusammenwirkt. Ferner weist das vorgenannte Elektromagnetventil 3 eine direkte hydraulische Verbindung des Hydraulikkanals 17 zum Druckmittelverbraucher 16 auf. Dieser Hydraulikkanal 17 steht unmittelbar mit der die Druckfeder 13 aufweisenden Aufnahmebohrung 14 in Verbindung, um in Abhängigkeit von der Schaltstellung der Elektromagnetventile 3,4 während der Druckmodulation die gewünschte hydraulisch gesteuerte Hubbewegung des Schieberventils 2 zu bewirken. Das Schieberventil 2 befindet sich baulich in Parallelanordnung zu dem die beiden Elektromagnetventile 3,4 mit der Radbremse verbindenden Hydraulikkanal 17, der über einen Querkanal mit der verlängerten Aufnahmebohrung 14 des Schieberventils 2 in Verbindung steht. Damit ergibt sich eine im wesentlichen in die Tiefe des Ventilblocks gerichtete Anordnung des Schieberventils 2, das von der abbildungsgemäßen linken Ventilblockseite zusammen mit der Druckfeder 13 in die Aufnahmebohrung 14 eingefügt und mittels Verschlußstopfen 18 druckmitteldicht verschlossen ist.

### Funktionsweise:

Im schlupffreien Normalbremsmodus verharren alle Ventile in der abbildungsgemäßen Stellung. Das Schieberventil 2 kontaktiert unter Einwirkung der Druckfeder 13 den Verschlußstopfen 18 derart, daß die mit der Blende 5 versehene erste Ringnut 7 zur Druckmittelquelle 6 hin geöffnet ist. Das linke Elektromagnetventil 3 ist stromlos geöffnet, während das rechte Elektromagnetventil 4 den Rückfluß zu einem Vorratsspeicher 19 sperrt. Somit gelangt das Druckmittel von dem als Druckmittelquelle 6 wirksamen Bremsgerät zur offenen ersten Ringnut 7, von dort über die Blende 5 und dem im wesentlichen axial verlaufenden Druckmittelkanal 11 innerhalb des Schieberventils zum offenen Elektromagnetventil 3 und schließlich auch zum radbremsseitigen Druckmittelverbraucher 16. Bei Ausbildung des Verschlußstopfens 18 als Einstellschraube ergibt sich überdies eine Möglichkeit zur genauen Einjustierung der am Schieberventil 2 vorgesehenen Regelkante 7, so daß die Abregelung des Volumenstroms unabhängig von Federtoleranzen variiert werden kann.

Sobald zum Zwecke der Druckabsenkung während der Schlupfregelphase das in der Grundstellung stromlos geschaltete Elektromagnetventil 4 den Rückfluß von Druckmittel zum Vorratsspeicher 19 öffnet, erfährt die an der Druckfeder 13 anliegende Stirnfläche des Schieberventils 2 eine Druckentlastung, so daß die von der Druckmittelquelle 6 beaufschlagte Ringfläche am Schieberventil 2 einen definierten Hub des Schiebers entgegen der Federwirkung ermöglicht. Infolgedessen verschließt die an der ersten Ringnut 7 wirksame Steuerkante 9 den Zulaufkanal 8 der Druckmittelquelle 6, was zwangsläufig zu einer Begrenzung des Volumenstroms und damit auch zur Verringerung des Ventilschaltgeräusches führt.

Durch die Integration eines Schieberventils 2 innerhalb des Ventilaufnahmekörpers 1 läßt sich eine Begrenzung des Volumenstroms realisieren, womit die Schaltgeräusche der Elektromagnetventile 3, 4 erheblich reduziert werden können. Ferner kann durch die Wahl einer entsprechend engtolerierten Spielpassung zwischen Schieberventil 2 und Ventilaufnahmekörper 1 auf die zusätzliche Anordnung von Dichtelementen verzichtet werden, ohne eine funktionsbeeinträchtigende Ringspaltleckage entstehen zu lassen. Somit ist eine bauraumoptimierte, kostengünstige Anordnung eines Strombegrenzers innerhalb des Ventilblocks gegeben, ohne maßgebliche konstruktive Veränderungen an den Elektromagnetventilen 3,4 oder am Ventilaufnahmekörper 1 vornehmen zu müssen. Die ursprüngliche Kanalführung im Ventilaufnahmekörper 1 kann unverändert beibehalten werden und es bedarf letztlich nur einer Verlängerung des Zulaufkanals 8 gegenüber dem unmittelbar die Elektromagnetventile 3,4 begrenzenden Hydraulikkanals 17. Die hydraulische Verbindung der Aufnahmebohrung 14 mit dem zum Verbraucheranschluß führenden Hydraulikkanals 17 erfordert lediglich einen zusätzlichen Bohrvorgang in vertikaler Richtung zum Hydraulikkanal 17.

Das auf einen Hydraulikblock für schlupfgeregelte Bremsanlagen bezogene Ausführungsbeispiel soll den prinzipiellen Erfindungsgedanken verdeutlichen. Die Übertragung auf andere, analoge Ausführungs- und Anwendungsvarianten der Erfindung ist denkbar, ohne einen Anspruch auf detaillierte Darstellung erheben zu können. Die Erfindung ist in ihrem Wesen übertragbar auf alle elektromagnetisch zu steuernde hydraulisch Einrichtungen, die hinsichtlich der Schaltgeräusche einer Beschränkung bedürfen.

### Bezugszeichenliste

- 1: Ventilaufnahmekörper
- 2: Schieberventil
- 3: Elektromagnetventil (stromlos offen)
- 4: Elektromagnetventil (stromlos geschlossen)
- 5: Blende
- 6: Druckmittelquelle
- 7: erste Ringnut
- 8: Zulaufkanal
- 9: Steuerkante
- 10: Steuerkante
- 11: Druckmittelkanal
- 12: Ringnut
- 13: Druckfeder
- 14: Aufnahmebohrung
- 15: Ringnut
- 16: Druckmittelverbraucher
- 17: Hydraulikkanal
- 18: Verschlußstopfen
- 19: Vorratsspeicher

## Patentansprüche

1. Hydraulikaggregat für hydraulische Steuer- oder Regelvorrichtungen, insbesondere für Bremsdruckregelvorrichtungen in Antiblockierregelsystemen oder Antriebsschlupfregelsystem für Kraftfahrzeuge, mit einem mehrere Elektromagnetventile (3,4) sowie Druckmittelkanäle (8,11,17) aufnehmenden Ventilaufnahmekörper (1), mit einem Ventildeckel zum Verschließen des Ventilaufnahmekörpers (1) und eine Stromzuführungsvorrichtung für die Strombeaufschlagung der Elektromagnetventile (3,4) dadurch **gekennzeichnet**, daß ein im Ventilaufnahmekörper (1) integriertes, hydraulisch betätigbares Schieberventil (2) in Abhängigkeit von der Schaltstellung der Elektromagnetventile (3,4) eine Regelung des Druckmittelvolumenstroms in den Druckmittel-Kanälen (8,11,17) vollzieht.

2. Hydraulikaggregat nach Anspruch 1, dadurch **gekennzeichnet**, daß das Schieberventil (2) eine Blende (5) aufweist, die in der Grundstellung des Schieberventils (2) eine hydraulische Verbindung zwischen einer Druckmittelquelle (6) und dem in der Grundstellung auf ungehinderten Durchlaß geschalteten Elektromagnetventil (3) herstellt.

3. Hydraulikaggregat nach Anspruch 1 oder 2, dadurch **gekennzeichnet**, daß die Blende (5) eine am Schieberventil (2) angeordnete erste Ringnut (7) in radialer Richtung durchdringt.

4. Hydraulikaggregat nach mindestens einem der vorhergehenden Ansprüche, dadurch **gekennzeichnet**, daß die Begrenzungsflächen der ersten Ringnut (7) und die Begrenzungsflächen eines an der Druckmittelquelle (6) angeschlossenen Zulaufkanals (8) relativ zueinander bewegbare Steuerkanten (9,10) innerhalb des Ventilaufnahmekörpers (1) bilden.

5. Hydraulikaggregat nach einem der vorhergehenden Ansprüche, dadurch **gekennzeichnet**, daß über einen im wesentlichen axial im Schieberventil (2) verlaufenden Druckmittelkanal (11) eine hydraulische Verbindung zwischen der ersten Ringnut (7) und einer weiteren am Schieberventil (2) angeordneten Ringnut (12) besteht, die mit dem in der Grundstellung auf ungehinderten hydraulischen Durchlaß geschalteten Elektromagnetventil (3) korrespondiert.

6. Hydraulikaggregat nach einem der vorhergehenden Ansprüche 1 bis 5, dadurch **gekennzeichnet**, daß das Schieberventil (2) stirnflächenseitig von einer Druckfeder (13) sowie vom geregelten hydraulischen Druck beaufschlagbar ist.

7. Hydraulikaggregat nach Anspruch 6, dadurch **gekennzeichnet**, daß die Druckfeder (13) in einer verlängerten, den Ventilaufnahmekörper (1) durchdringenden sowie das Schieberventil (2) führenden Aufnahmebohrung (14) angeordnet ist, die in Abhängigkeit von der Schaltstellung des in der Grundstellung geschlossen geschalteten Elektromagnetventils (3,4) druckbeaufschlagt ist.

8. Hydraulikaggregat nach einem der vorhergehenden Ansprüche, dadurch **gekennzeichnet**, daß der von der Druckfeder (13) beaufschlagte Endbereich des Schieberventils (2) vorzugsweise mehrere Ringnuten (15) aufweist, wobei der Endbereich des Schieberventils (2) einen Kurzschlußstrom zwischen der Druckmittelquelle (6) und einem Druckmittelverbraucher (16) verhindert.

9. Hydraulikaggregat nach mindestens einem der vorhergehenden Ansprüche, dadurch **gekennzeichnet**, daß die Blende (5) und die am Schieberventil (2) ausgebildeten beiden Ringnuten (7,12) in Reiheschaltung die Druckmittelquelle (6) mit dem in der Grundstellung auf ungehinderten Durchlaß geschalteten Elektromagnetventil (3) verbinden.

10. Hydraulikaggregat nach einem der vorhergehenden Ansprüche, dadurch **gekennzeichnet**, daß die erste Ringnut (7) gegenüber der zweiten Ringnut (12) eine kleinere Nutbreite aufweist, um den Volumenstrom zu regeln.

## Claims

1. A hydraulic unit for hydraulic control and regulation apparatuses, more particularly for brake pressure control units in anti-lock control systems or traction slip control systems for automotive vehicles, with a valve accommodation body (1) which accommodates a plurality of solenoid valves (3, 4) as well as pressure agent ducts (8, 11, 17), with a valve cover to close the valve accommodation body (1) and a current supply apparatus for the energization of the solenoid valves (3, 4),
**characterized** in that a hydraulically actuatable slide valve (2) integrated into the valve accommodation body (1) controls the pressure agent volumetric stream in the pressure agent ducts (8, 11, 17) depending on the switching position of the solenoid valves (3, 4).

2. A hydraulic unit as claimed in claim 1,
**characterized** in that the slide valve (2) is furnished with an orifice (5) which, in the normal position of the slide valve (2), establishes a hydraulic connection between a pressure agent source (6) and the solenoid valve (3) which is switched to free passage in its normal position.

3. A hydraulic unit as claimed in claim 1 or in claim 2, **characterized** in that the orifice (5) penetrates in the radial direction through a first annular groove (7) which is positioned at the slide valve (2).

4. A hydraulic unit as claimed in at least anyone of the preceding claims,
**characterized** in that the defining surfaces of the first annular groove (7) and the defining surfaces of a supply duct (8), which is connected to the pressure agent source, form control edges (9, 10) within the valve accommodation body (1) which are movable relative to each other.

5. A hydraulic unit as claimed in anyone of the preceding claims,
**characterized** in that through a pressure agent duct (11), extending substantially in the axial direction within the slide valve (2), a hydraulic connection exists between the first annular groove (7) and another annular groove (12) which is positioned at the slide valve (2) and which communicates with the solenoid valve (3) switched to free hydraulic passage in its normal position.

6. A hydraulic unit as claimed in anyone of the preceding claims 1 to 5,
**characterized** in that, on its front surface, the slide valve (2) is subjectible to the action of a compression spring (13) as well as to the controlled hydraulic pressure.

7. A hydraulic unit as claimed in claim 6,
**characterized** in that the compression spring (13) is positioned within an extended accommodating bore (14) penetrating through the valve accommodation body (1) for guiding the slide valve (2), which accommodating bore (14) is pressurized depending on the switching position of the solenoid valve (3, 4) which is switched to the closed condition in its normal position.

8. A hydraulic unit as claimed in anyone of the preceding claims,
**characterized** in that the end range of the slide valve (2), which is subject to the action of the compression spring (13), is preferably furnished with a plurality of annular grooves (15), the end range of the slide valve (2) preventing a short circuit flow between the pressure agent source (6) and a pressure agent consumer (16).

9. A hydraulic unit as claimed in at least anyone of the preceding claims,
**characterized** in that the orifice (5) and the two annular grooves (7, 12) are configured at the slide valve (2), in a series connection linking the pressure agent source (6) to the solenoid valve (3) being switched to free passage in its normal position.

10. A hydraulic unit as claimed in anyone of the preceding claims,
**characterized** in that the first annular groove (7) presents a smaller groove width as compared to the second annular groove (12) in order to control the volumetric stream.

## Revendications

1. Groupe hydraulique destiné à des dispositifs de commande ou de régulation hydrauliques, en particulier à des dispositifs de régulation de pression de frein dans des systèmes de régulation antiblocage ou des systèmes de régulation de patinage d'entraînement pour des véhicules à moteur, comprenant un corps récepteur de vannes (1) recevant plusieurs électrovannes (3, 4) ainsi que des canaux de milieu de pression (8, 11, 17), un couvercle de vannes pour fermer le corps récepteur de vannes (1) et un dispositif d'acheminement de courant pour alimenter en courant les électrovannes (3,4), caractérisé en ce gu une soupape à tiroir (2) intégrée au corps récepteur de vannes (1) et commandable hydrauliquement effectue une régulation du volume de milieu de pression en fonction de la position de commutation des électrovannes (4).

2. Groupe hydraulique selon la revendication 1, caractérisé en ce que la soupape à tiroir (2) présente un diaphragme (5) qui établit, dans la position de base de la soupape à tiroir (2), une liaison hydraulique entre une source de milieu de pression (6) et l'électrovanne (3) commutée en passage libre dans sa position de base.

3. Groupe hydraulique selon la revendication 1 ou 2, caractérisé en ce que le diaphragme (5) passe radialement à travers une première rainure annulaire (7) agencée sur la soupape à tiroir (2).

4. Groupe hydraulique selon au moins l'une des revendications précédentes, caractérisé en ce que les surfaces de limitation de la première rainure annulaire (7) et les surfaces de limitation d'un canal d'admission (8) raccordé à la source de milieu de pression (6) forment des bords de commande (9, 10) qui peuvent se déplacer l'un par rapport à l'autre à l'intérieur du corps récepteur de vannes (1).

5. Groupe hydraulique selon l'une quelconque des revendications précédentes, caractérisé en ce que, via un canal de milieu de pression (11) s'étendant en substance axialement dans la soupape à tiroir (2), il s'établit une liaison hydraulique entre la première rainure annulaire (7) et une autre rainure annulaire (12) agencée sur la soupape à tiroir (2), cette dernière rainure correspondant à l'électrovanne (3) commutée en passage hydraulique libre dans sa position de base.

6. Groupe hydraulique selon l'une quelconque des revendications 1 à 5, caractérisé en ce que la soupape à tiroir (2) peut être sollicitée, côté surface avant, par un ressort de compression (13) ainsi que par la pression hydraulique régulée.

7. Groupe hydraulique selon la revendication 6, caractérisé en ce que le ressort de compression (13) est agencé dans un alésage récepteur (14) prolongé traversant le corps récepteur de vannes (1) et guidant la soupape à tiroir (2), cet alésage étant alimenté en pression en fonction de la position de commutation de l'électrovanne (3, 4) commutée fermée dans sa position de base.

8. Groupe hydraulique selon l'une quelconque des revendications précédentes, caractérisé en ce que la zone terminale de la soupape à tiroir (2) sollicitée par le ressort de compression (13) présente de préférence plusieurs rainures annulaires (15), la zone terminale de la soupape à tiroir (2) empêchant un courant de courtcircuit entre la source de milieu de pression (6) et un utilisateur de milieu de pression (16).

9. Groupe hydraulique selon au moins l'une des revendications précédentes, caractérisé en ce que le diaphragme (5) et les deux rainures annulaires (7, 12) formées sur la soupape à tiroir (2) relient en série la source de milieu de pression (6) à l'électrovanne (3) commutée en passage libre dans sa position de base.

10. Groupe hydraulique selon l'une quelconque des revendications précédentes, caractérisé en ce que la première rainure annulaire (7) présente vis-à-vis de la deuxième rainure annulaire (12) une largeur de rainure plus petite pour réguler le flux de volume.
